# EUROPEAN PATENT APPLICATION

(11) **EP 1 274 197 A2**
(43) Date of publication of application: **08.01.2003**
(21) Application number: 01309115.2
(22) Date of filing: 26.10.2001
(51) Int. Cl.: H04L 12/24

(54) **Method and system for setting communication parameters**

(30) Priority: 06.07.2001 JP 2001206473
(71) Applicant: Allied Telesis K. K., Shinagawa-ku, Tokyo 141-8635 (JP)
(72) Inventor: Sato, Takayuki, c/o Allied Telesis Kabushiki K., Shinagawa-ku, Tokyo 141-8635 (JP)
(74) Representative: Faulkner, Thomas John

(57) **Abstract**

The network system 1 comprises a target device 60 to be managed that is connected to a network, and a management device 10 that manages the target device 60. The management device 10 enables the target device to establish communications over the network and includes a first IC card drive 20 in which an IC card 50 stores communication parameters for enabling the management device 10 to manage the target device, and the target device includes a second IC card drive 70 for reading the communication parameters stored in the IC card to set the communication parameters that have been read.

## Description

This invention relates generally to a communications apparatus management, and more particularly to an initial setting method of a communications apparatus. This invention is suitably applicable to initial settings of communication parameters on a network apparatus, the communication parameters enabling the network apparatus such as hubs and routers to establish communications over a network.

The widespread use of local area networks (LANs) and wide area networks (WANs) in recent years has allowed a great many personal computers (hereinafter referred to as PCs), hubs, switches, routers and other types of network apparatuses (among which an intelligent hub or the like may be called "agent") to get connected to networks and subnetworks thereof, where information is shared and transmitted in high traffic volume. Distributed environments in management of configuration, performance, security, and billing in the network would offer a difficulty in locating or isolating a possible problem with enormous cost entailed, and a drawback on risk management. Therefore, there has arisen a need for centralized management of network status conditions.

In order to perform network management, a management device (which may also be called "manager" or "server") monitors a connection status and traffic in agents, on the premise that target agents to be managed have been connected to the network and then communication parameters have been set. The communication parameters, which include IP address and the like, are used to enable communications capabilities of a network apparatus, and to make the network apparatus manageable to the manager.

Among methods for setting communication parameters such as IP address on the network apparatus have been conventionally proposed a manual setting and an automated setting. The manual setting is a method using serial data communications, in which a terminal is connected with a target agent via an RS-232C interface to enter commands for directly setting communication parameters. On the other hand, the automated setting is a method using communications protocols such as BOOTP (BOOTstrap Protocol), DHCP (Dynamic Host Configuration Protocol), TFTP (Trivial File Transfer Protocol), in which a server automatically sets the communication parameters on clients online upon startup.

The manual setting method may retain a high level of security in that an administrator may configure communication parameters while checking each network apparatus as a target agent one by one, but the more the number of target agents, the more the load of configuration. Particularly, where tens of or hundreds of PCs and other agents are connected to the network as in the recent network environments accompanied with the development of LAN and WAN, the load of configuration becomes too much, and the time required for the configuration becomes long. On the other hand, the automated setting method is advantageous in less load of configuration as the communication parameters are set automatically, but is disadvantageous in security management in that anybody who intends to obtain information through unauthorized access to the network, or to attack a specific device may be allowed to connect his/her device to the network. Moreover, it is of managerial importance that the IP address of each agent should be fixed, and thus the setting of the IP addresses using DHCP or the like would change allocation of the address or fail to allocate the address with each startup operation, disabling the management. Further, administrators used to fail to grasp the specific configuration of network apparatuses connected to the network and the subnetworks thereof (hereinafter referred to as "network configuration"), and thus disadvantageously cannot perform administration in details such as grasping a firmware version of each network apparatus, and confirming identification information of a user who operates the apparatus.

Accordingly, it is an exemplified object of the present invention to provide a method and system for performing an initial setting of communication parameters on a network apparatus more easily and securely.

Another exemplified object of the present invention is to provide a method and system for performing an initial setting of communication parameters on a network apparatus, in which an administrator may readily grasp details of network configuration.

In order to achieve the above objects, a network system as one aspect of the present invention comprises a target device to be managed that is connected to a network, and a management device that manages the target device, wherein the management device enables the target device to establish communications over the network and includes a first IC card drive in which an IC card stores communication parameters for enabling the management device to manage the target device; and wherein the target device includes a second IC card drive for reading the communication parameters stored in the IC card to set the communication parameters that have been read. The network system uses the IC card as a relay to perform an initial setting of the communication parameters on the target device. This enables the communication parameters to be set only by insertion of the IC card into the target device, achieving a relatively easy setting operation, and the availability of cryptographic feature or the like in the IC card and the indispensable provision of the second IC card drive in the target device for the setting of the communication parameters facilitates the maintenance of security relatively. The above communication parameters may include, for example, an IP address, a subnet mask, a gateway address, a DNS address, and a router address. The target device may be, for example, a hub, a router, and a switch.

The above second IC card may further store device information unique to the target device in the IC card, and the management device may read and store the device information unique to the target device stored in the IC card via the first IC card drive. This allows the management device to manage the communication parameters and device information of the target device.

The above management device may further store an address of the management device in the IC card, and the above target device may call the address to communicate with the management device after setting the communication parameters. This allows the target device to communicate with the management device to confirm the setting of the communication parameters. Moreover, the target device, when communicating with the management device, may transmit the device information unique to the target device to the management device, and the management device may store the device information unique to the target device. This allows the management device to manage the communication parameters and device information of the target device.

The above device information unique to the target device may include a MAC address, a housing identifier of the target device, a version number of hardware and firmware used in the target device.

The above communication parameters may include at least one of encryption information used for communications over the network (*e.g.,* key information), security information for identifying a user of the target device (*e.g*., a user ID and a password), and an address for transmitting a notification that the target device is abnormal. The inclusion of these managerial parameters may allow the management device to exercise fine management into further details.

The above target device may store end-of-setting information in the IC card via the second IC card drive after the communication parameters are set. Storing the end-of-setting information in the IC card serves, for example, to prevent the IC card from being used for more than one device. Similarly, the management device may store end-of-storage information in the IC card via the first IC card drive after storing the device information unique to the target device. Storing the end-of-storage information in the IC card serves, for example, to prevent the unique device information stored in the IC card from being used for more than one device.

According to another aspect of the present invention, there is provided a method for performing an initial setting of communication parameters on a communications apparatus, the communication parameters enabling the communications apparatus to establish communications over a network, and the method comprises the steps of allocating the communication parameters to a plurality of the communications apparatuses, storing the communication parameters in an information recordable medium, and setting the communication parameters by allowing the plurality of the communications apparatuses to read data on the information recordable medium. This method uses an information recordable medium as a relay to perform an initial setting of the communication parameters on the communications device. This method enables the communication parameters to be set only by letting the target device read data on the information recordable medium, thus achieving a relatively easy setting operation, and only the target device that can read data on the information recordable medium is allowed to have the communication parameters set, whereby security may be maintained more easily. The above storing step may encrypt the communication parameters and then store the encrypted parameters in the information recordable medium, and the above setting step may decrypt the communication parameters and provide for reading. This can enhance security of the network. The setting step may be executed upon shipping a target device to be managed. The restrictions on the execution of the setting step to upon shipping can enhance security of the network.

A method for setting management parameters according to another aspect of the present invention comprises the steps of storing device information unique to a target device to be managed connected to a network in an information recordable medium, and allowing a management device that manages the target device to read data on the information recordable medium for storing the information. This method uses an information recordable medium as a relay to store management parameters on the target device in the management device. Since the management parameters may be stored in the management device only by letting the management device read data on the information recordable medium, security may be maintained easily.

According to another aspect of the present invention, there is provided a method for performing an initial setting of communication parameters on a communications apparatus, the communication parameters enabling the communications apparatus to establish communications over a network, and the method comprises the steps of setting the network and subnetworks that may exist in the network, setting the number of the communications apparatuses connected respectively to the networks and the subnetworks, setting specific communication parameters on a possible specific communications apparatus, automatically setting the communication parameters corresponding to the communications apparatus other than the specific communications apparatus, and creating a list of pairs of the communications apparatuses and the communication parameters. This method allows the communication parameters of a plurality of communications apparatuses to be managed at one place by creating a list of pairs. The above communication parameters may include security information for identifying a user of the communications apparatus. This enables fine management into further details to be exercised on the communications apparatus. Similarly, the method may further comprise the step of setting device information unique to the communications apparatus, and the step of creating a list of pairs may have the device information unique to the communications apparatus included in the list of pairs. This enables fine management into further details to be exercised on the communications apparatus. These methods may be implemented via a program.

A communications apparatus according to another aspect of the present invention is connected to the network, and comprises an IC card drive for reading data on an IC card that stores communication parameters for enabling the communications apparatus to establish communications over the network, and a processor that sets the communication parameters stored in the IC card. This communications apparatus may also have the same operation as above. A program that performs the reading and setting steps as described above may be stored and distributed in a recordable medium as an independent commodity, or distributed and updated via the Internet or the like.

For a better understanding of the invention, and to show how the same may be carried into effect, reference will now be made, by way of example, to the accompanying drawings, in which:-
Fig. 1 schematically illustrates a structure of a network system of the present invention.
Fig. 2 is a schematic block diagram of a management device of the network system as shown in Fig. 1.
Fig. 3 is a management table stored in a storage part of the management device as shown in Fig. 2.
Fig. 4 is a schematic block diagram of a network apparatus of the network system as shown in Fig. 1.
Fig. 5 is a flowchart of operations for setting communication parameters of the network system as shown in Fig. 1.
Fig. 6 is a flowchart for representing the steps of a program for creating the management table as shown in Fig. 3.
Fig. 7 is a timing chart for representing an operation of the network system as shown in Fig. 1.
Fig. 8 is a timing chart for explaining a management operation of the network system as shown in Fig. 1.

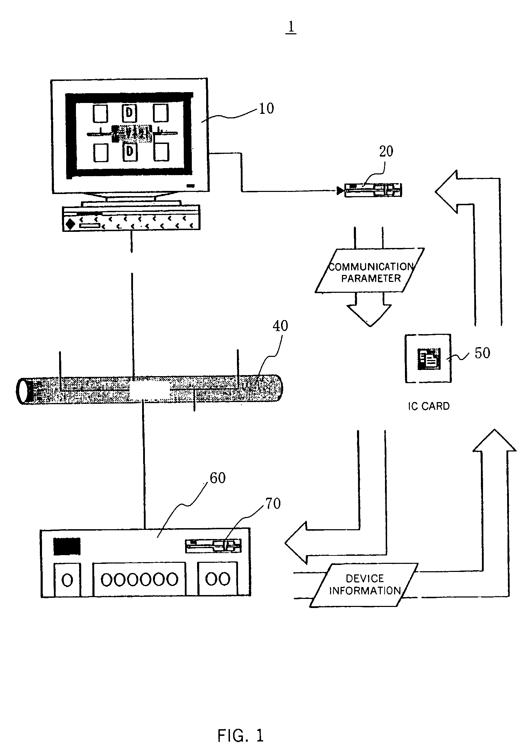

A description will now be given of a network system 1 of the present invention with reference to the accompanied drawings. Fig. 1 is a structural illustration of the network system 1 of the present invention. The network system 1 includes, as illustrated, a management device 10, an Ethernet network 40, and a network apparatus 60.

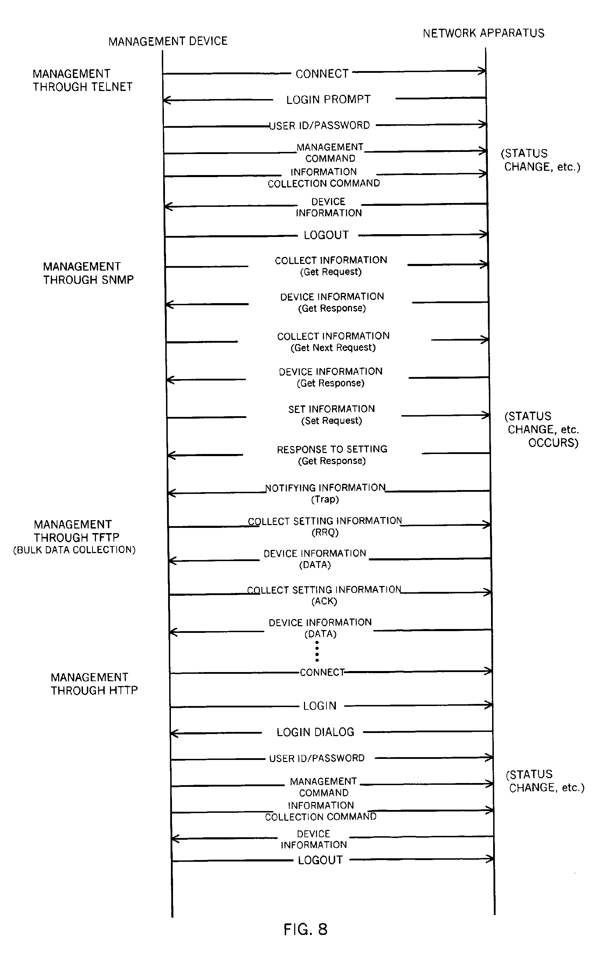

The management device 10 manages the network apparatus 60. To be more specific, the management device 10 manages a status condition and traffic of connection established between the network apparatus 60 and the other apparatuses, and thereby manages the configuration, performance, security, and billing of the Ethernet network 40. In the present embodiment, as will be described later with reference to Fig. 8, the management device 10 manages the network apparatus 60 using SNMP.

In the configuration management, the status conditions of devices constituting the network are monitored, and an operation of each device is controlled. In addition, a firmware version may be acquired for each device. This allows a network administrator to grasp the current network configuration. In the performance management, the performance of the devices constituting the network is measured. The performance management allows the network administrator to monitor the status conditions of traffic of each device to see the network activities as to whether an abnormal packet is transmitted, whether there is a shortcoming in performance of the server, or the like. In the security management, the use of resources (information and devices) in the network is restricted and controlled to encourage a valid use of these resources. The network administrator periodically investigates an access record of users to find an unauthorized use, or to prevent an unauthorized user from invading the network. In the billing management, the use statuses of the resources in the network are recorded for each user. The network administrator grasps the use rates of the network resources for each user to issue a warning to a user who abuses the resources or to use such information for providing better services.

The management device 10 in the present embodiment is constructed exemplarily as a desktop PC, to which an IC card drive 20 is attached externally or internally. A contact-type IC card 50 is used for the IC card drive 20, but the noncontact-type IC card is not excluded from application to the present invention. Further, the present invention is also applicable to information recordable media other than the IC card.

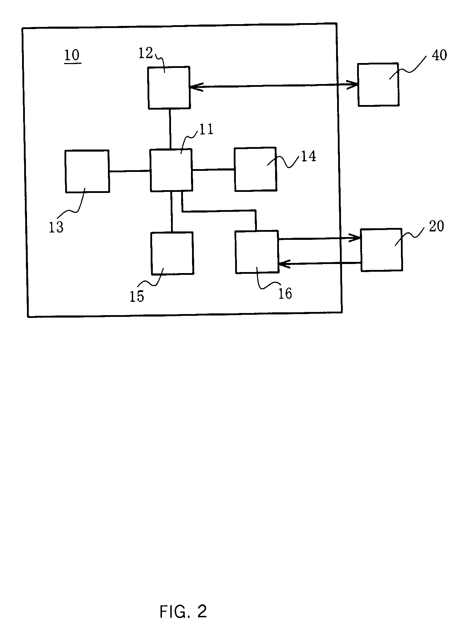

The management device 10 includes, as shown in Fig. 2, a controller 11, a communication port 12, a RAM 13, a ROM 14, a storage part 15, and an interface 16. Fig. 2 is a schematic block diagram of the management device 10. In Fig. 2, input/output devices (e.g., a keyboard, a mouse or other pointing devices, and a display) attached to the management device are not illustrated. Through the input/output device, an operator of the management device 10 may control the IC card driver 20, input data of various kinds in the storage part 15, and download software as necessary into the RAM 13, and ROM 14 or storage part 15.

The controller 11, which covers a broad range of processors such as a CPU and an MPU regardless of what we may call that, controls each section of the management device 10. If necessary, the management device 10 may be connected to a host (not shown), and the controller 11 may communicate with the host. The controller 11, in conjunction with the present invention, executes a management table creation program stored in the storage part 15 to set communication parameters on the network apparatus 60 and construct a management table. The controller 11 stores all or part of the management table in the IC card 50 through the IC card driver 20. Moreover, the controller 11 manages the network apparatus 60 via the communication port 12.

The communication port 12 may be an LAN adapter for establishing a connection to the Ethernet network 40, and a USB port or IEEE 1394 port for providing connection to the Internet (as necessary, via an Internet service provider (ISP)) via a modem, or a terminal adapter (TA) through the public telephone network, ISDN, or various types of dedicated lines. The RAM 13 temporarily stores data to be read from the ROM 14 or the storage part 15 or data to be written in the storage part 15 or the like. The ROM 14 stores various kinds of software required to have the controller 11 operated, firmware, and other types of software.

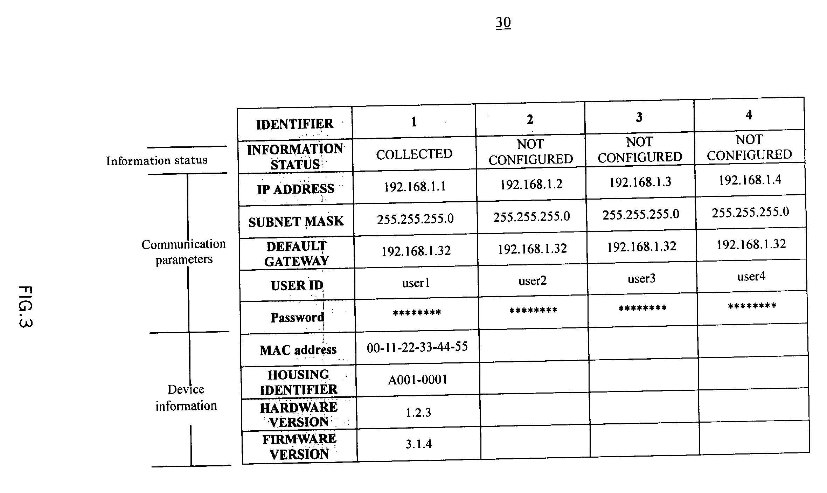

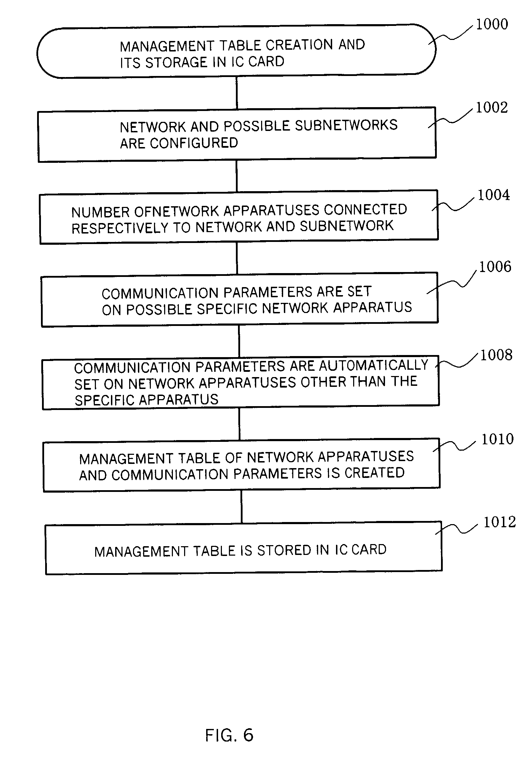

The storage part 15 stores a management table creation program for creating the management table 30 as shown in Fig. 3 and the management table as shown in Fig. 6. Fig. 3 shows one example of the management table. The management table creation program may be distributed as an independent commodity. Accordingly, the program may be sold in a CD-ROM or other recordable media, or distributed and updated online via a network such as the Internet.

The management table 30 in the present embodiment represents a relationship between the communication parameters corresponding to the network apparatus 60 and the device information unique to the network apparatus 60, where four network apparatuses 60 are connected to a network or a subnetwork as a segment of the network. This management table 30 enables an inventory management of the communication parameters on a plurality of the network apparatuses 60 to be performed at one place.

With identifiers 1 through 4 may be identified the four different network apparatuses 60. The information statuses are indicated with 'Collected' and 'Not Configured'. The 'Collected' denotes that device information as will be described later has been stored, while 'Not Configured' denotes that the device information has not been stored yet. In the present embodiment, only the device information of the network apparatus 60 with the identifier 1 is stored. The 'Collected' information is also stored in the IC card 50 that will be described later.

The communication parameters include an IP address, a subnet mask, a default gateway, and a user ID and password. However, the communication parameters are not limited thereto, but may include a DNS (Domain Name System) address and a router address.

The IP (Internet Protocol) address is an address that is assigned to computers or network apparatuses connected to a network supporting TCP/IP, and is represented as a series of numbers in decimal notation separated by periods, each number ranging from 0 to 255. The IP address is included in an IP header provided by the IP protocol arranged in the network layer of the TCP/IP protocol.

The subnet mask is a bit pattern for separating the host address part of the IP address into the subnet address and the host address. When "255.255.255.0" is set in the subnet mask, the first three numbers are represented in binary notation as "11111111". "1" in the subnet mask denotes the same network. Accordingly, in the present embodiment, the four network apparatuses 60 are connected to the network represented by the IP address "192.168.1.0".

The default gateway is an IP gateway through which a host transmits an IP datagram when the host for transmitting the IP datagram incorporates a routing table including a target IP address, unless the target IP address has the same network address as the host.

The user ID and password pair is an identifier for preventing unauthorized use of the network apparatus 60 in the network. The management device 10 may store information which was acquired in advance by offline means such as telephone, facsimile, and ordinary mail before setting communication parameters from the user of each network apparatus 60 on the network apparatus 60, or may acquire the information by online means or using an IC card 40 after the communication parameters have been set.

The communication parameters may include cryptographic information (*e.g.,* key information and encryption scheme), and an address of the management device 10 for transmitting a notification that the network apparatus 60 is abnormal (*e.g.,* a trap signal for use with SNMP as will be described later).

The device information unique to the network apparatus 60 may include a MAC address, a housing identifier, a hardware version, and a firmware version.

The MAC (Media Access Control) address is an address for identifying an information apparatus connected to a LAN, and a hardware address of a interconnecting device located in a communications path for reaching an IP address. The housing identifier is an identifier of a housing of the network apparatus 60. The hardware version is a version of hardware of the network apparatus 60, and the firmware version is a version of firmware of the network apparatus 60.

If the controller 11 could display a tree of a network structure of the Ethernet network 30 from information in the management table 30, it would preferably facilitate user's understanding.

The present embodiment uses the Ethernet network 40 as a typical LAN. The Ethernet network 40 is a LAN in a bus topology, and includes 10Base-T, 100Base-TX, Gigabit Ethernet, and the like. However, the present invention is not only applicable to the above, but also to other types of LAN (*e.g*., Token Ring), and networks other than LAN such as WAN (Wide Area Network), MAN (Metropolitan Area Network), private network, the Internet, commercial dedicated lines network (e.g., America Online), and other networks.

The IC card 50 is a general term that covers a smart card, an intelligent card, a chip-in card, a microcircuit (microcomputer) card, a memory card, a super card, a multi-function card, a combination card, and the like. In addition, the IC card of the present invention is not limited to a card-shaped medium, but includes any medium which is, for example, of the size of a postage stamp or smaller, *i.e*., very small-size one, or shaped like a coin, etc.

The network apparatus 60 is a target device to be managed by the management device 10, and includes network apparatuses such as a hub, a switch, a router, other concentrators, a repeater, a bridge, a gateway device, and a PC.

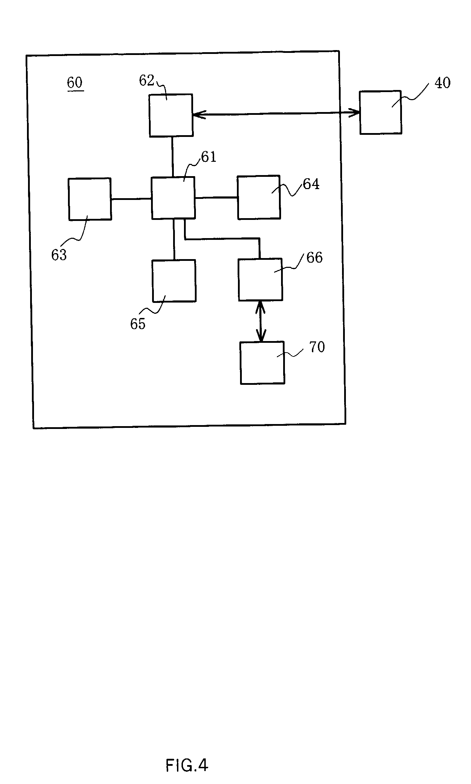

The network apparatus 60 includes, as shown in Fig. 4, a controller 61, a communication port 62, a RAM 63, a ROM 64, a storage part 65, an interface 66, and an IC card driver 70. Fig. 4 is a schematic block diagram of the network apparatus 60. In Fig. 4, the input and output devices (*e.g*., a keyboard, a mouse or other pointing devices, and a display) attached to the management device 60 are not illustrated. Through the input/output device, an operator of the network apparatus 60 may control the IC card driver 70, input data of various kinds in the storage part 65, and download software as necessary into the RAM 63 and the storage part 65. The IC card driver 70 is associated with an internal drive, but may be with an external drive, and functionally similar to the IC card driver 20, and thus a detailed description will be omitted.

The controller 61, which covers a broad range of processors such as a CPU or an MPU regardless of what we may call that, controls each section of the network apparatus 60. The controller 61, in conjunction with the present invention, reads communication parameters stored in an IC card through the IC card driver 70, and performs an initial setting based on the information that has been read. Moreover, The controller 61 stores the device information in the IC card through the IC card driver 70.

The communication port 62 may be an LAN adapter for establishing a connection to the Ethernet network 40, and a USB port or IEEE 1394 port for providing connection to the Internet (as necessary, via an Internet service provider (ISP)) via a modem, or a terminal adapter (TA) through the public telephone network, ISDN, or various types of dedicated lines. The RAM 63 temporarily stores data to be read from the ROM 64 or the storage part 65 or data to be written in the storage part 65 or the like. The ROM 64 stores various kinds of software required to have the controller 61 operated, firmware, and other types of software.

The storage part 65 stores a communication parameter configuration program. The communication parameter configuration program is the program for reading and configuring communication parameters stored in the IC card 50. An example of the program will be described later with reference to Fig. 6. The communication parameter configuration program may be distributed as an independent commodity. Accordingly, the program may be sold in a CD-ROM or other recordable media, or distributed and updated online via a network such as the Internet.

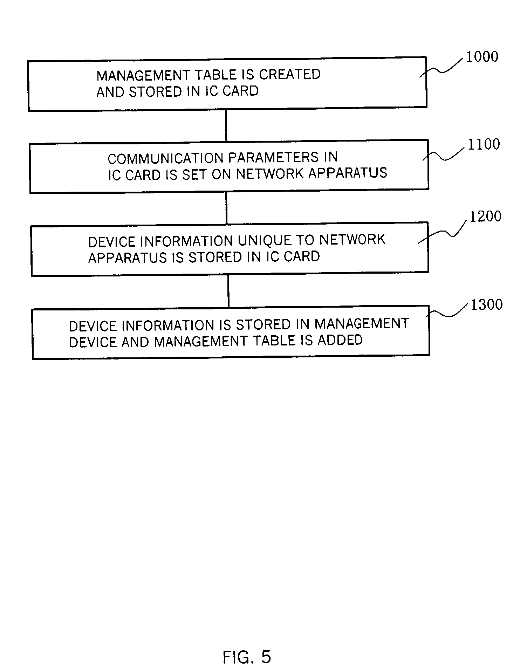

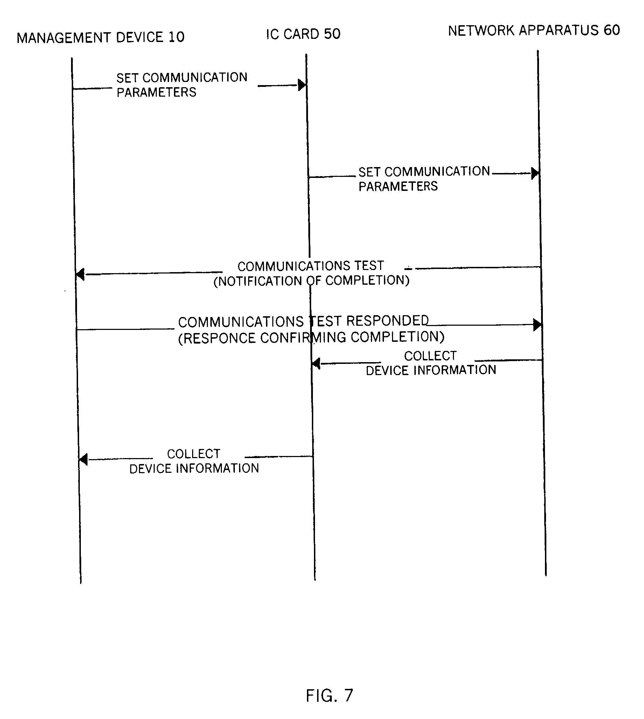

A description will now be given of an operation of the inventive network system 1 setting communication parameters with reference to Figs. 5 though 7. Fig. 5 is a flowchart for explaining the operation of the network system 1. Fig. 6 is a flowchart showing the procedural steps of the management table creation program. Fig. 7 is a timing chart for explaining the operation of the network system 1.

Referring to Fig. 5, the network system 1 first creates a management table 30 and stores the same in an IC card 50 (step 1000). The step 1000 is indicated in Fig. 7 by an arrow from the management device 10 toward the IC card 50.

Referring now to Fig. 6, a description will be given of details of the step 1000. The management device 10 needs to store the management table 30 in the storage part 15, but does not necessarily have to create the management table 30, and may store the management table 30 created in another PC or the like. Therefore, although the management device 10 performs this step in the present embodiment, another PC or the like may exercise the method illustrated in Fig. 6.

First of all, the controller 11 invites a user to input the Ethernet network 30 and subnetworks that could be in the Ethernet network 30, and configure the network in accordance with the input (step 1002). The user may, for example, specify a subnetwork for each section of his/her office.

Next, the controller 11 invites the user to input the number of network apparatuses 60 connected to the Ethernet network 30 and subnetworks respectively, and configure the network in accordance with the input (step 1004).

Next, the controller 11 sets specific communication parameters on a possible specific network apparatus 60 (step 1006). That is, as in step 1008 that will be described below, the controller 11 automatically sets communication parameters on the network apparatus 60, but leaves room for allowing a preferred IP address to be selected for a particular network apparatus 60. This, for example, allows a user who uses a specific network apparatus 60 (*e.g.*, a manager of a section) to be given the IP address having the lowest number.

Next, the controller 11 automatically sets communication parameters on the network apparatuses 60 other than the specific network apparatus 60 (step 1008). In that event, the controller 11 may set the IP addresses in serial numbers or at random. This step reduces the burden on an administrator during configuration tasks in comparison with the conventional manual setting via a serial communication.

Next, the controller 11 creates a management table 30 of the network apparatuses 60 and the communication parameters (step 1010). As a result, the management table 30 as shown in Fig. 3 is created. This step, as described above, allows the administrator of the management device 10 to administer the Ethernet network 30 at one place.

Lastly, the controller 11 stores all or part of the management table 30 in the IC card 50 through the IC card drive 20 (step 1012). To be more specific, the controller 11 commands the IC card drive 20 via the interface 16 to transmit communication parameters from the storage part 15 and store the same in the IC card. In this operation, the controller 11 may store the entire management table 30 as shown in Fig. 30, or only part of the communication parameters on a particular network apparatus 60, or part of the communication parameters on network apparatuses 60 belonging to the same subnetworks.

The IC card 50 may have a distinctive feature in appearance for identifying the kinds of stored information. For instance, characters, patterns, or colors or a combination of these indications that differ according to the sections of the firm may be applied directly (*e.g*., written directly on a housing of the IC card 50) or indirectly (*e.g*., a label so indicated is affixed on the housing of the IC card 50) to the IC card 50.

The IC card 50 may have identifying information inside for identifying the kinds of stored information. For instance, the sections or locations to which the information is applied may be recorded as property information of the management table 30 together with the management table 30.

If the user ID/password pair with which the user of the network apparatus 60 may log in the Ethernet network 40 has been notified in advance to the management device 10, the controller 11 adds the pair into the management table 30, and otherwise, the controller 11 will add the pair later. In the latter case, the controller 11 will add the information in the management table 30, for example, when the IC card 50 is returned from the network apparatus 60, or when performing a communications test after setting the communication parameters on the network apparatus 60.

Since the management device 10 has not beforehand acquired the device information of the management table 30, the controller 11 will add the information in the management table 30, for example, when the IC card 50 is returned from the network apparatus 60, or when performing a communications test after setting the communication parameters on the network apparatus 60.

When performing a communications test as will be described later, the controller 11 further stores in the IC card 50 communication information that includes its own IP address and MAC address.

The controller 11 preferably inquires a user in each step as described above whether the network topology should be displayed in a treelike chart, and displays the tree if the user wishes so.

Returning to Fig. 5, the communication parameters in the IC card 50 are set on the network apparatus 60 (step 1100). The step 1100 is indicated by an arrow from the IC card 50 toward the network apparatus 60 in Fig. 7.

First, a user of the management device 10 withdraws an IC card 50 from the IC card driver 20, carries and inserts the IC card 50 into the IC card driver 70. The user of the management device 10 who carries the IC card 50 to a network apparatus 60 would never carry the IC card 50 to a terminal with which an unauthorized user might access to the network, and thus the network security may be effectively maintained.

However, even if anybody other than the user of the management device 10 carried the IC card 50, security could be enhanced to a higher level than that which were achieved by the conventional method of an initial setting utilizing DHCP or the like. First, since the network apparatus 60 should be internally or externally equipped with an IC card drive 70, network apparatuses 60 that is not equipped with the IC card drive 70 may be excluded. Moreover, if the use of the IC card 50 is linked with the purchase and/or use of the network apparatus 60, and the IC card 50 is collected after the initial setting, then insertion of the IC card 50 into a malicious user's terminal may be prevented. For example, the IC card 50 may be distributed and collected by a predetermined person in a section of the firm.

In step 1100, the controller 61 reads and sets some of the communication parameters stored in the IC card 50 corresponding to the pertinent network apparatus 60. More specifically, the controller 61 sets the communication parameters obtained through the IC card drive 70 and the interface 66 on the storage part 65. Since the controller 61 automatically sets the communication parameters, a setting operation of the communication parameters is easier than a manual setting operation via serial communications.

Not only when the IC card 50 stores communication parameters for more than one network apparatus 60, but also when the IC card 50 stores communication parameters for only one network apparatus 60, a mechanism for preventing communication parameters stored in another IC card 50 from being set is required.

Therefore, the controller 61 is required to identify the communication parameters on the pertinent network apparatus 60 among those stored in the IC card 50. For example, if user ID and password pairs are stored in the IC card 50, the controller 61 may invite a user of the network apparatus 60 to enter his/her user ID/password pair, and set the identified communication parameters. Such a process is particularly effective when specific communication parameters should be set on a specific network apparatus 60. For example, this applies to such a case as the IP address having the lowest number is assigned to a network apparatus 60 of the manager of the pertinent section.

Alternatively, in step 1100, the controller 61 may set any of multiple sets of communication parameters stored in the IC card 50. Because setting arbitrary IP addresses on the network apparatuses 60 in the same section does not entail any particular disadvantages for each network apparatus 60.

In this case, assignment of an identical IP address to more than one network apparatus 60 should be avoided. For example, if the IC card has user ID/password pairs stored in advance, the controller 61 invites a user of the network apparatus 60 to enter his/her user ID/password pair, and sets the identified communication parameters, so that duplicate settings of the identical communication parameters on different network apparatuses may be avoided. Moreover, with the only one IC card 50 distributed, the controller 61 places a flag to a set of the communication parameters to indicate that the set of the communication parameters have been already set so that duplicate settings of the same communication parameters may be avoided by determining whether the set of the communication parameters is flagged.

Even when the controller 61 arbitrarily sets communication parameters on each network apparatus 60, the communication parameters stored in the IC card 50 must be those for the same network or subnetwork. Accordingly, if the IC card 50 stores the management table 30 in entirety including different networks or subnetworks, the controller 61 should select the communication parameters for the same network or subnetwork. The controller 61 may refer to property information in the management table 30, if the IC card 50 stores the same as described above.

If only one set of communication parameters is available for the network apparatus 60, the controller 61 automatically sets the set of communication parameters in the storage part 65. On the other hand, when more than one set of communication parameters is available for the network apparatus 60, the controller 61 selects any among the sets of the communication parameters and automatically stores the same in the storage part 65. Selection may be made at random or in ascending or descending order. The controller 61 as necessary may notify a user that more than one set of communication parameters is available, and provide an indication to invite selection. The controller 61 records in the IC card 50 information that the set of communication parameters has been set, to prevent that set of communication parameters from being used for other network apparatuses 60.

Returning to Fig. 5 again, after the communication parameters have been set, the controller 61 stores device information unique to the network apparatus 60 in the IC card 50 (step 1200). The step 1200 is indicated in Fig. 7 by an arrow from the network apparatus 60 toward the IC card 50.

To be more specific, the controller 61 commands the IC card drive 70 via the interface 66 to transmit the device information from the storage part 65 and store the same in the IC card 50. If user ID and password pairs have not been included in the management table 30 yet, the controller 61 stores these data together with the device information in the IC card 50 at the same time.

Alternative to step 1200, the device information and/or security information (*i.e*., user ID and password) may be transmitted during a communications test as will be described later.

Next, the user carries the IC card 50 to the management device 10, and inserts the same into the IC card drive 20. As described above, the user of the network apparatus 60 is not required to carry the IC card 50 by him-/herself to the management apparatus 10, but may send by mail or ask someone to do so. Thereafter, the controller 11 commands the IC card drive 20 via the interface 16 to transmit the device information from the IC card 50, and the device information when received is added to the management table 30 in the storage part 15 (step 1300). The step 1300 is indicated in Fig. 7 by an arrow from the IC card 50 toward the management device 10. The controller 11 records "Collected" in the management table 30 to indicate that that device information has been collected and stored, and stores the same in the IC card 50 as well.

Referring next to Fig. 7, a description will be given of a communications test. The communications test is indicated in Fig. 7 by an arrow from the network apparatus 60 toward the management device 10. The communications test is a test performed to make a notification (of completed configuration) that the communication parameters have been successfully configured, after settings of the communication parameters is complete.

First, the controller 61 determines whether an address of the management device 10 is included in the IC card 50, and if included, calls that address via the communication port 62, and performs a communications test. If the controller 61 can communicate with the management device 10, the controller 61 determines that the set communication parameters are valid, and completes the communications test. In this case, the management device 10 transmits to the network apparatuses 60 notification (response confirming completion) that test communications from the controller 61 have been responded. On the other hand, if the controller 61 cannot communicate with the management device 10, the controller 61 determines that the set communication parameters are invalid, and completes the communications test. The controller 61, if required, may transmit the device information and/or the security information (*i.e*., user ID and password pairs) upon communications test.

Referring next to Fig. 8, a description will be given of a management operation of the network system 1. Fig. 8 is a timing chart for explaining the management operation of the network system 1. As shown in Fig. 8, the management device 10 of the present embodiment performs management through TELNET, management through SNMP, management through TFTP, that is, bulk data collection, and management through HTTP.

First, the management device 10 communicates with the network apparatus 60 using TELNET. TELNET is a protocol that enables communications between the management device 10 and the network apparatus 60 on a TCP/IP network. The management device 10, as is the case with a server such as on UNIX, connects the network apparatus 60, and invites an administrator to enter a user ID and password to log in the system of the network apparatus 60 in response to a login prompt from the network apparatus 60. Next, the management device 10 allows the administrator to enter a management command and an information collection command in accordance with displayed messages, and the network apparatus 60 transmits the device information in response.

In the present embodiment, the management device 10 performs management using SNMP (Simple Network Management Protocol), a standard protocol for the TCP/IP network management. In operation, SNMP uses the four types of messages: (1) get (for collecting management information); (2) get-next (for collecting management information); (3) set (for setting management information); and (4) trap (for notifying a failure). Specifically, normally under SNMP a GUI (Graphical User Interface) application is launched in the management device 10, and if information is required as a result of the operation, the information obtained by transmitting a GetRequest or GetNextRequest message, and receiving a GetResponse message is displayed on screen. If configuration is required, a SetRequest message is issued and a setting result is received. If status conditions in the network apparatus 60 have changed, the network apparatus 60 independently transmits a trap signal to the management device 10, and the management device 10 displays a message therefor.

TFTP transmits and receives mainly setting information and firmware of the network apparatus 60 in the form of a file. For example, the setting information is collected as a file, and if the network apparatus 60 fails, the file is transmitted by return and used when the original setting information should be restored.

Under HTTP (Hypertext Transfer Protocol), HTML documents are transmitted and received between the management device 10 and the network apparatus 60. The operation in HTTP is almost the same as in TELNET, but the human interface is based upon a Web page, rather than a command prompt, and thus a user may operate the management device 10 by selecting at his/her discretion a graphical element such as icon or window displayed on the screen using a pointing device.

If the network apparatus 60 is identified as an unauthorized device, the management device 10 as necessary refuses the login, and transmits an HTML document to notify the network apparatus 60 to that effect, and records the fact.

Although the preferred embodiments of the present invention have been described above, various modifications and changes may be made in the present invention without departing from the spirit and scope thereof. In the present invention, for example, the number of IC cards 50 may be restricted to fifty, and a person entitled to carry the IC card 50 may be restricted.

According to the initial setting method and system in the present invention, communication parameters may be set on a network apparatus with comparative ease, and with network security maintained. Furthermore, the management device may create a management table (correspondence list), so that an administrator may perform inventory management of communication parameters for more than one network apparatus at one place.

## Claims

1. A network system comprising a target device to be managed that is connected to a network, and a management device that manages the target device,
wherein the management device enables the target device to establish communications over the network and includes a first IC card drive in which an IC card stores communication parameters for enabling the management device to manage the target device; and
wherein the target device includes a second IC card drive for reading the communication parameters stored in the IC card to set the communication parameters that have been read.

2. A network system according to claim 1, wherein the communication parameters include at least one of an IP address, a subnet mask, a gateway address, a DNS address, a router address.

3. A network system according to claim 1, wherein the second IC card drive further stores device information unique to the target device in the IC card; and
wherein the management device reads and stores the device information unique to the target device stored in the IC card via the first IC card drive.

4. A network system according to claim 1, wherein the management device further stores an address of the management device in the IC card, and the target device calls the address to communicate with the management device after setting the communication parameters.

5. A network system according to claim 4, wherein the target device, when communicating with the management device, transmits the device information unique to the target device to the management device; and
wherein the management device stores the device information unique to the target device.

6. A network system according to claim 3 or 5, wherein the device information unique to the target device includes at least one of a MAC address, a housing identifier of the target device, a version number of hardware and firmware used in the target device.

7. A network system according to claim 1, the communication parameters include at least one of encryption information used for communications over the network, security information for identifying a user of the target device, and an address for transmitting a notification that the target device is abnormal.

8. A network system according to claim 1, wherein the target device stores end-of-setting information in the IC card via the second IC card drive after the communication parameters are set.

9. A network system according to claim 3 or 5, wherein the management device stores end-of-storage information in the IC card via the first IC card drive after storing the device information unique to the target device.

10. A network system according to claim 1, wherein the target device includes at least one of a hub, a router, and a switch.

11. A method for performing an initial setting of communication parameters on a communications apparatus, the communication parameters enabling the communications apparatus to establish communications over a network, the method comprising the steps of:
allocating the communication parameters to a plurality of the communications apparatuses;
storing the communication parameters in an information recordable medium; and
setting the communication parameters by allowing the plurality of the communications apparatuses to read data on the information recordable medium.

12. A method according to claim 11, wherein the storing step encrypts the communication parameters and stores the encrypted parameters in the information recordable medium; and
wherein the setting step decrypts the communication parameters and provides for reading.

13. A method according to claim 11, wherein the setting step is executed upon shipping a target device to be managed.

14. A method for setting management parameters comprising the steps of:
storing device information unique to a target device to be managed connected to a network in an information recordable medium; and
allowing a management device that manages the target device to read data on the information recordable medium for storing the information.

15. A method for performing an initial setting of communication parameters on a communications apparatus, the communication parameters enabling the communications apparatus to establish communications over a network, the method comprising the steps of:
setting the network and subnetworks that may exist in the network;
setting the number of the communications apparatuses connected respectively to the networks and the subnetworks;
setting specific communication parameters on a possible specific communications apparatus;
automatically setting the communication parameters corresponding to the communications apparatus other than the specific communications apparatus; and
creating a list of pairs of the communications apparatuses and the communication parameters.

16. A method according to claim 15, wherein the communication parameters include security information for identifying a user of the communications apparatus.

17. A method according to claim 16, further comprising the step of setting device information unique to the communications apparatus,
wherein the step of creating a list of pairs have the device information unique to the communications apparatus included in the list of pairs.

18. A program that exercises the method for performing an initial setting of communication parameters on a communications apparatus, the communication parameters enabling the communications apparatus to establish communications over a network, the method comprising the steps of:
setting the network and subnetworks that may exist in the network;
setting the number of the communications apparatuses connected respectively to the networks and the subnetworks;
setting specific communication parameters on a possible specific communications apparatus;
automatically setting the communication parameters corresponding to the communications apparatus other than the specific communications apparatus; and
creating a list of pairs of the communications apparatuses and the communication parameters.

19. A communications apparatus connected to the network, comprising:
an IC card drive for reading an IC card that stores communication parameters for enabling the communications apparatus to establish communications over the network; and
a processor that sets the communication parameters stored in the IC card.

20. A program that exercises a method comprising the steps:
reading data on an IC card that stores communication parameters for enabling communications apparatus connected to a network to establish communications over the network; and
setting the communication parameters stored in the IC card.
